# EUROPEAN PATENT SPECIFICATION

(11) **EP 1 947 605 B1**
(45) Date of publication and mention of the grant of the patent: **06.03.2019**
(21) Application number: 07018531.9
(22) Date of filing: 23.12.2005
(51) Int. Cl.: G06T 5/00, G06T 3/00

(54) **Automatic perspective distortion detection and correction for document imaging**
Automatische Detektion und Korrektur von Perspektivenverzerrung für Dokumentabbildungen
Détection et correction automatiques de la distorsion de perspective pour l'imagerie documentaire

(30) Priority: 25.02.2005 CA 2498484; 17.03.2005 US 82588
(43) Date of publication of application: 23.07.2008
(62) Divisional of application: 05258049.5
(73) Proprietor: Psion Systems Inc., Mississauga ON L5N 7J9 (CA)
(72) Inventor: Orhun, Ufuk, Ontario, K2H 7C8 (CA)
(74) Representative: LKGLOBAL Lorenz & Kopf PartG mbB Patentanwälte

(56) References cited:
- EP-A- 0 672 994
- WO-A-01/58128
- DE-A1- 4 331 188
- US-A- 5 813 771
- US-A1- 2003 123 710
- US-B1- 6 671 423

## Description

### FIELD OF INVENTION

The present invention relates generally to the field of image readers, and more particularly to a method and apparatus for correcting perspective distortions and orientation errors.

### BACKGROUND OF THE INVENTION

The use of portable image readers over fixed-mount image readers is increasing and these portable image readers are seeing applications in many industries. One of the main challenges with portable image readers however is the perspective distortion caused by inconsistent image reading positions. With fixed-mount systems, such as a document scanner, the image reader is placed in such a manner that the optical path of the image reader is perpendicular to the image plane. With portable systems, however, the position of the image reader is dependent on a human operator. It is difficult for an operator to know the ideal point from where to capture an image of a target such as a document. More often than not, the user captures the image at an oblique angle, i.e. the image reader is not in a plane parallel to the plane of the document, and the captured image is skewed.

Accordingly, the image data may be uploaded to a personal computer for processing by various correction algorithms. The algorithms are employed to correct the distortion effects associated with off-angle images of documents. The correction algorithms require a user to manually identify the corners of a region of a captured image. Many image readers use geometric transforms such as affine transformations during post-processing of the image to correct for perspective distortions. In order to apply these transforms, the edges or corners of the image need to be defined. By measuring the spatial displacement of the identified corners from desired positions associated with a rectangular arrangement, an estimation of the amount of distortion is calculated. The correction algorithm then processes the imaged document to possess the desired perspective and size as necessary.

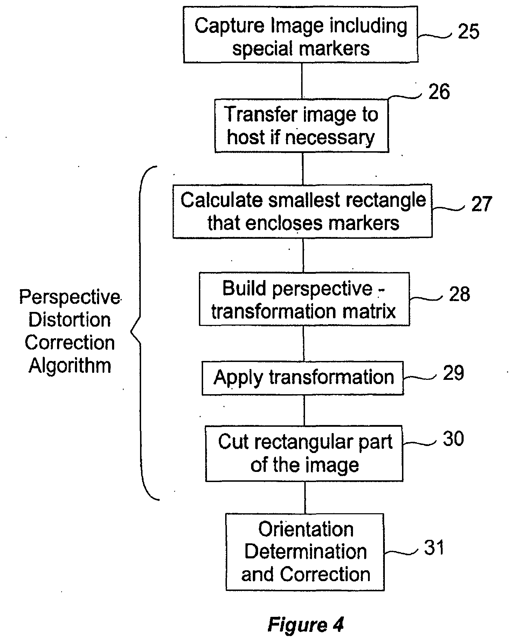

U.S. Patent Applications 2003/0156201 - Zang published August 21, 2003; 2004/0012679 - Fan published January 22, 2004 and 2004/0022451- Fugimoto published February 5, 2004 discuss automatic methods for identifying the corner or edges of the document based on statistical models. While these methods do not require user input to manually identify the document corners, additional complexity is added to the image reader. Also, the degree of accuracy is not the same when the locations of the corners are estimated positions. A document can also contain many different types of objects such as 1 or 2-dimensional codes, text, written signatures, etc. As a result it may be difficult to define the boundaries of the document by statistical methods.
Fujimoto (US 6,671,423) discloses transforming image coordinates to be within a given tolerance of reference coordinates. Fujimoto requires the coordinates of the reference graphics to be known, in order to calculate the coordinates of the image graphics within a given tolerance.
Stein (DE4331188) uses reference markers located along the periphery of the image to correct the image. The reference markers 46 form a grid (Fig. 4) and have known positions. In Stein, the distorted data is corrected based on the known positions of the reference markers.

Further, the prior art accounts for correction of perspective distortion, but cannot correct for orientation. The operator may not always align the image reader in the same orientation as the document so the captured image may require rotation. Many image readers have rectangular aspect ratios so it is necessary at times to rotate the image reader by 90 degrees with respect to the document in order to "fill" the field of view (FOV) of the image reader with the document.

Therefore there is a need for an image reader that can automatically correct for both perspective distortion and orientation.

### SUMMARY OF THE INVENTION

The present invention is directed to a method of producing a principal image of a target using a plurality of special boundary markers, the plurality of special boundary markers forming a predetermined shape and being located on the boundary of the target, an image capture device capturing the image of the target with the plurality of special boundary markers, the method comprising:
based on the captured image, calculating the smallest predetermined shape that encloses the images of all of the special boundary markers; building a geometric transform to map the locations of the images of all of the plurality of special boundary markers in the captured image to corresponding locations on the smallest predetermined shape; and processing the captured image to obtain the principal image of the target, including transforming the captured image based on the geometric transform.

The present invention is also directed to a system for producing a principal image of a target using a plurality of special boundary markers, the plurality of special boundary markers forming a predetermined shape and being located on the boundary of the target, an image capture device capturing the image of the target with the plurality of special boundary markers, the system comprising:
means for calculating, based on the captured image, the smallest predetermined shape that encloses the images of all of the special boundary markers; means for building a geometric transform to map the locations of the images of all of the plurality of special boundary markers in the captured image to corresponding locations of the smallest predetermined shape; and means for processing the captured image to obtain the principal image of the target, including transforming the captured image based on the geometric transform.

The special boundary markers may include a unique identifier marker different from the other special boundary markers, which is used to correct orientation errors in the captured image.

Processing the captured image may comprise cutting out the principal image within the smallest predetermined shape in the transformed captured image.
The target may be transposed onto a document template having the plurality of special boundary markers so that the image capture device captures the image of the target with the plurality of special boundary markers.
The plurality of special boundary markers may be detected prior to the calculation, and a feedback signal may be generated based on the result of the detection, the feedback signal indicating if the images of all of the plurality of special boundary markers are capturable by the image capture device.

In accordance with a specific aspect of the invention, the predetermined shape of the image is a rectangle and the special boundary markers are corner markers. Further, the geometric transform comprises affine transformations.

In accordance with another aspect of this invention, orientation errors in the image may be corrected by rotating the captured image.

In accordance with a specific aspect of this invention, the special boundary markers are polygon shapes.

Other aspects and advantages of the invention, as well as the structure and operation of various embodiments of the invention, will become apparent to those ordinarily skilled in the art upon review of the following description of the invention in conjunction with the accompanying drawings.

### BRIEF DESCRIPTION OF THE DRAWINGS

The invention will be described with reference to the accompanying drawings, wherein:
Figure 1 is a simplified diagram of an image reader;
Figure 2 shows how perspective distortion is caused;
Figure 3 shows the results of applying the present invention to an image with perspective distortion;
Figure 4 is a flowchart outlining the process steps of a first embodiment of the present invention;
Figure 5 shows an example of unique document markers;
Figure 6 shows how the smallest rectangle is determined as part of the perspective distortion correction algorithm;
Figure 7 is a flowchart outlining the process steps of a second embodiment of the present invention; and
Figure 8 is a simplified diagram on an image reader employing the algorithms of the present invention.

### DETAILED DESCRIPTION

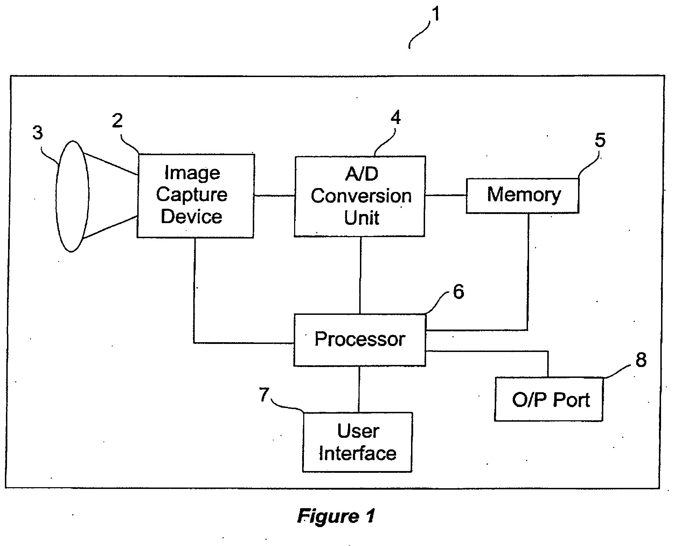

A conventional image reader, such as a portable image reader **1** is shown in the simplified diagram of Figure 1. It comprises an image capture device **2**, such as a CCD or CMOS image sensor, an optical system **3** mounted over the image sensor, an analog-to-digital (A/D) conversion unit **4**, memory **5**, processor **6**, user interface **7** and output port **8**.

The analog information produced by image capture device **2** is converted to digital information by AID conversion unit **4**. A/D conversion unit **4** may convert the analog information received from image capture device **2** in either a serial or parallel manner. The converted digital information may be stored in memory **5** (e.g., random access memory or flash memory). The digital information is then processed by processor **6.** Additionally or alternatively, other circuitry (not shown) may be utilized to process the captured image such as an application specific integrated circuit (ASIC). User interface **7** (e.g., a touch screen, keys, and/or the like) may be utilized to edit the captured and processed image. The image may then be provided to output port **8**. For example, the user may cause the image to be downloaded to a personal computer (not shown) via output port **8**.

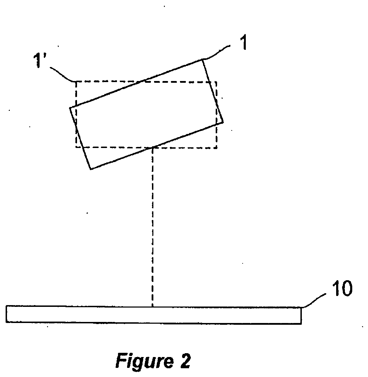

Figure 2 shows diagrammatically how perspective distortion is caused. Image reader **1'** shown in dotted lines shows it in the correct position over a target **10** such as a document to ensure distortion-free imaging. In practice, the position of image reader **1** is as shown in solid lines. Image reader **1** is shown at an oblique angle with respect to document **10**. Since the optical path of image reader **1** is not directly perpendicular with surface of document **10**, perspective distortion will result.

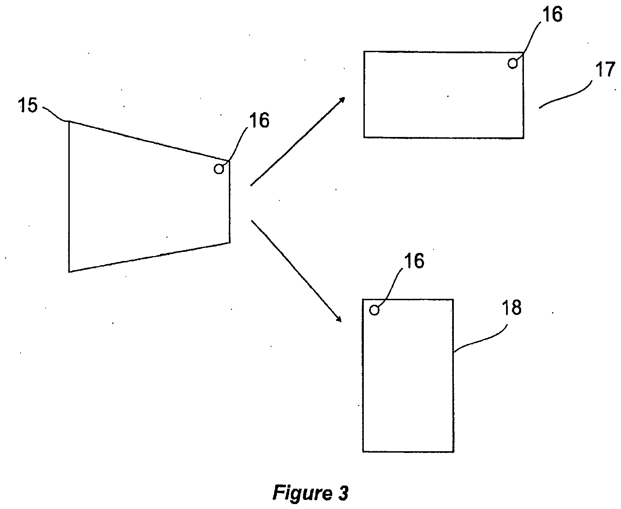

Figure 3 shows the results of applying the method of the present invention to an image suffering from perspective distortion. Captured image **15** is a skewed image of a document. A marker **16** on the document indicates the location of the upper left hand corner of the document. In applying the present invention to captured image **15**, the automatic perspective detection and correction method of the present invention produces a processed image **17**. The distortion is removed from processed image **17**, but marker **16**, which indicates the upper left hand corner of the document, shows that processed image **17** is not oriented correctly. If perspective distortion correction and orientation correction are applied together, the result is processed image **18**. Marker **16** of processed image **18** correctly indicates the upper left hand corner of the document, thus confirming correct orientation.

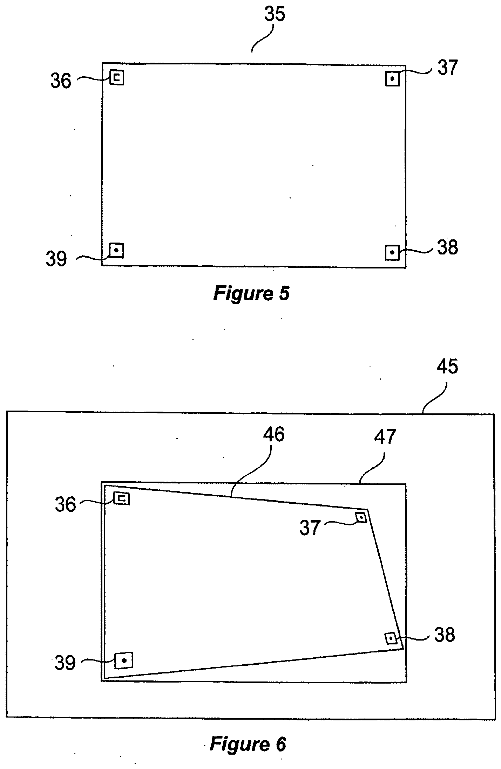

Figure 4 shows a flowchart outlining a first embodiment of the present invention. The first step of the process is to capture **25** an image of the target such as a document **35** including special markers **36**, **37**, **38** and **39** as shown on figure 5. The special markers **36, 37, 38** and **39** are included on the document **35** to identify the four corners of the document boundary. Three markers **37, 38 and 39** out of the four markers **36, 37**, **3**8 and **39** are identical, while a fourth marker **36** indicates a particular corner for example, the upper left hand corner. This is used as an orientation reference marker. The markers **36, 37, 38** and **39** in the present invention are polygon forms such as squares, circles or triangles. The markers **36, 37, 38** and **39** should be unique enough so that they are not confused with other objects on the document. A document template would include these special markers **36, 37, 38** and **39** and as a result all documents to be imaged will have the special markers. It should be understood by those skilled in the art that any number or shape of markers falls within the present invention.

Figure 5 shows a specific example of a document template **35** having four special markers **36**, **37**, **38** and **39**. Any targets that would need to be read such as one or two-dimensional codes, text or hand-written signatures would be transposed onto the document template and would be bounded by the four special markers **36**, **37**, **38** and **39**. In the first embodiment of the present invention, the four special markers **36**, **37**, **38** and **39** define the boundary of the target in the document. These markers define the corners of a rectangle that encompasses the target. Those skilled in the art will realize that any number of markers forming any polygon defining the target may be implemented while still falling within the scope of the present invention. In figure 5, the four markers all include a square, but whereas markers **37**, **38** and **39** all contain dots, marker **36** contains a three-line segment. This marker **36** uniquely identifies the upper left hand corner of document **35**. If this document is captured by an image reader and marker **36** appears on the bottom left hand corner, it will be evident that a rotation is required to correct the orientation.

Referring to step **25** of figure 4 again, as the operator attempts to read an image, the image reader projects a targeting pattern onto the target image. This targeting pattern indicates to the operator either the center of, or the boundary of the image reader's FOV. The operator may need to move the image reader back and forth in front of the image so that the image reader can detect all of the special markers **36**, **37**, **38** and **39**. Detection is done through pattern recognition software. The image reader will read all objects within its field of view until it identifies the special markers **36**, **37**, **38** and **39**. Since these markers **36**, **37**, **38** and **39** are located along the periphery of the document, any object that appears similar to the markers, but is located in the center of the document, will be discarded. As soon as the image reader detects the four special markers **36**, **37**, **38** and **39**, it will give feedback to the operator in the form of a visual indicator such as a light-emitting diode (LED) or an audible signal. Upon receiving the feedback, the operator can capture **25** the image. Since these markers **36**, **37**, **38** and **39** are necessary for the perspective distortion correction, the process cannot continue if they are not all detected. After image capture and special marker detection, the image and marker locations are transferred **26** to the host such as a personal computer for image processing. The image reader can also do the processing, if this capability is present.

Once it is established that all markers are present on the captured image, correction of the captured image begins. The first step of the perspective correction algorithm is to calculate **27** the smallest rectangle that encloses all the markers of the captured image. Figure 6 shows a diagram of determining the smallest rectangle. Boundary **45** defines the FOV of the image reader as well as the boundary of the captured image. Document **46** located within boundary **45** suffers from perspective distortion. Markers **36**, **37**, **38** and **39** define the corners or boundaries of document **46**. Based on the locations of these markers **36**, **37**, **38** and **39**, the smallest rectangle that encloses them is defined by rectangle **47**. The corrected image will have an area defined by rectangle **47**.

The second step of the perspective correction algorithm is to build **28** a perspective transformation matrix that will map the markers of the captured image to the corresponding corners of the smallest rectangle. This requires the use of geometric transforms such as affine transformations. This technique is known to those skilled in the art and will not be discussed further here.

The third step of the perspective correction algorithm is to apply **29** the transformation, which will move the markers of the captured image to the corners of the smallest rectangle that encloses the captured image. The last step of the correction algorithm is to cut **30** the rectangular part of the image, the part of the image defined by the smallest rectangle, from the rest of the captured image. This rectangular image is then made the principal image. In reference to Figure 6, the image defined by rectangle **47** is cut away from the image area defined by boundary **45**. The image area defined by rectangle **47** becomes the principal image. This reduces the image size thus taking up less space in memory and making transmission of the image, such as to a host, much easier.

The final step in the process outlined in Figure 4 is to determine **31** if rotation is required **31**. This determination is based on the location of the upper left-hand corner marker **36**, the orientation reference marker. The location of this marker **36** in any other corner other than the predetermined orientation reference corner marker, the upper left one, for example, indicates that rotation is required. The orientation reference marker is not limited to upper-left hand corner. Other corners can be envisioned while still falling within the scope of the present invention.

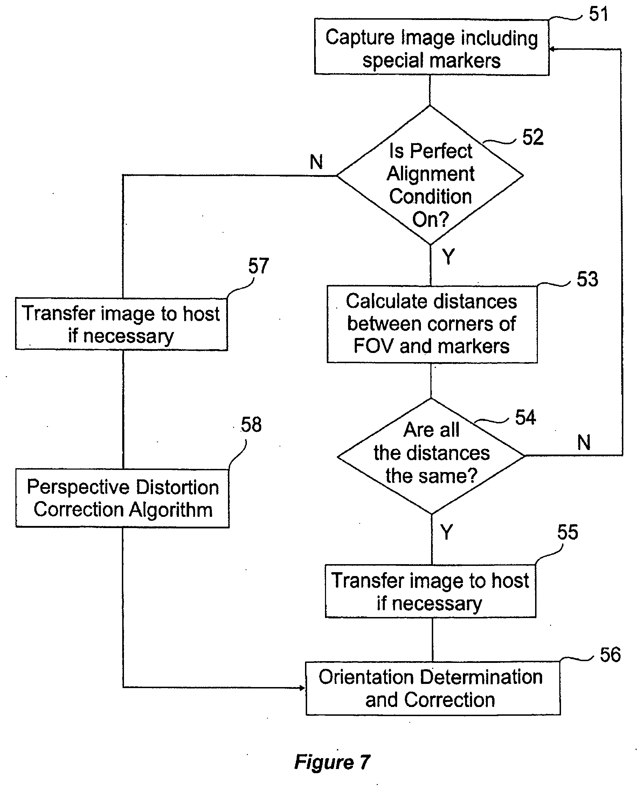

A further embodiment of the present invention incorporates perspective distortion detection that will reduce or may even eliminate the need for perspective distortion correction. This is done by determining a perfect alignment condition in which to capture the image. If the user can be guided as to how to correctly align the image reader over the target, perspective distortion in the resultant image can be avoided. Figure 7 outlines the process for this embodiment of the present invention. The first step of capturing **51** the image including special markers **36**, **37**, **38** and **39** is similar to the first step of Figure 4. Once all the special markers **36**, **37**, **38** and **39** are detected, feedback is given to the operator to capture **51** the image.

The next step of the process is to determine if the perfect alignment condition is switched on or enabled **52** in the image reader. If it is enabled, the next step **53** calculates the distance between the corners of the FOV **45** and the markers **36, 37, 38** and **39**, i.e. the distance between the upper left hand corner of the FOV **45** and the upper left hand marker **36** and so on. Once the distances are measured for each of the four corners, the algorithm determines **54** if the distances between each marker and the corresponding FOV corner are all the same. If they are all the same, or within a predetermined tolerance to each other, the image is considered to be distortion free and the process continues to step **55**. In this case, the image reader will provide "positive" feedback to the operator such as a LED indicator or an audible signal. If the distances are not all the same, the image reader will provide "negative" feedback, to indicate to the operator that distortion exists in the captured image and to re-capture the image. The algorithm then returns to step **51**. This feedback is meant to guide the operator to manually correct the image reader alignment. This can be done through a number of ways such as left/right and/or top/bottom LED indicators. If the image reader needs to be moved in a particular direction, the appropriate LED will illuminate. Another option is the use of audible tones. As the operator moves the image reader, the tones can indicate if the operator is approaching proper alignment or increasing the amount of distortion.

Step **55** transfers the image to a host processor such as a personal computer for image processing. Step **55** is optional if the capability is present for the image reader itself to perform any post-processing.

The last step of this process is orientation determination and correction **56**. Upon examination of the location of the orientation reference corner marker, the image may require rotation.

If it was determined that the perfect alignment condition was turned off or disabled in step **52**, the image is transferred **57** to a host processor for image processing. This step is optional if the post-processing capability is present on the image reader. The next step is to correct **58** for perspective distortion by implementing the perspective distortion correction algorithm outlined in figure 4. Once the image has been corrected for distortion, the orientation determination and correction algorithm is applied **56**.

It is also to be noted that it is within the present scope of this invention to correct **58** to correct the image for perspective distortion after step **55**. This would be particularly desirable to correct for the minor perspective distortion permitted by the tolerances in step **54**.

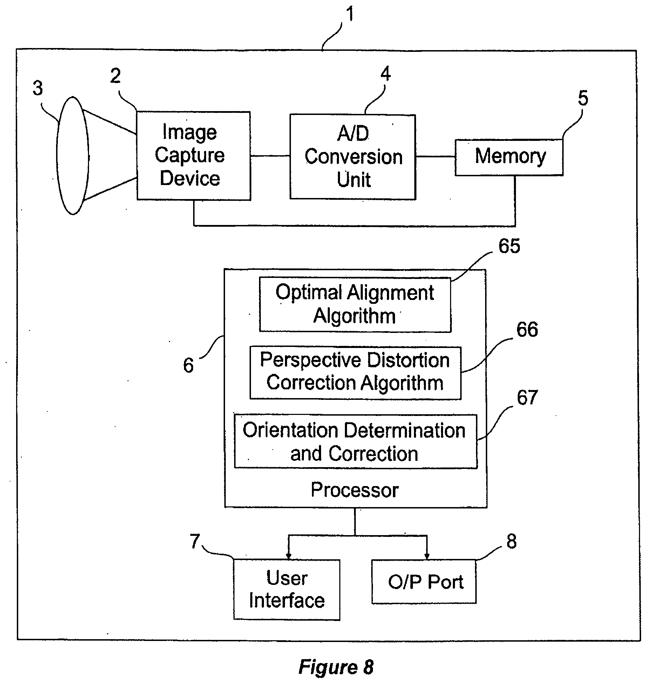

Figure 8 shows the diagram of an image reader **1** of Figure 1, but further including the algorithms of the present invention. Assuming that the captured image is not transferred to a host and the image reader 1 itself does the post-processing, the processor **6** of Figure 8 includes the algorithms of the present invention. These include the optimal alignment algorithm **65** outlined in Figure 7 and the perspective distortion correction algorithm **66** outlined in Figure 4. If the optimal alignment condition is enabled, algorithm **65** is applied. If it is disabled, the perspective distortion correction algorithm **66** is applied.

From the embodiments described above, the present invention has the advantage of being simpler than the prior art by avoiding complex corner/edge detecting algorithms. The accuracy is also higher since the corners of the document are identifiable by the special markers, whereas the prior art uses statistical methods to provide an estimate of the document corners.

A further advantage of the present invention is the detection of perspective distortion, which gives feedback to the operator for correct positioning of the image reader. Perspective distortion correction may not be necessary if the operator can be guided into capturing a distortion-free image.

Those ordinarily skilled in the art will understand that various modifications and equivalent structures and functions may be made without departing from the scope of the invention as defined in the claims. Therefore, the invention as defined in the claims must be accorded the broadest possible interpretation so as to encompass all such modifications and equivalent structures and functions.

## Claims

1. A method of producing a principal image of a target using a plurality of special boundary markers (36, 37, 38, 39), the plurality of special boundary markers (36, 37, 38, 39) forming a predetermined shape and being located on the boundary of the target, an image capture device (2) capturing the image (46) of the target with the plurality of special boundary markers (36,37,38, 39), the method comprising:
based on the captured image (46), calculating (27) the smallest predetermined shape
(47) that encloses the images of all of the special boundary markers (36, 37, 38, 39);
building (28) a geometric transform to map the locations of the images of all of the plurality of special boundary markers (36, 37, 38, 39) in the captured image (46) to corresponding locations on the smallest predetermined shape (47); and
processing the captured image (46) to obtain the principal image of the target, including transforming (29) the captured image (46) based on the geometric transform.

2. The method as claimed in claim 1 wherein the plurality of special boundary markers (36, 37, 38, 39) include a unique identifier marker (36) different from the other special boundary markers (37, 38, 39), and wherein the method comprises:
correcting (31) for orientation errors in the captured image (46) based on the unique identifier marker (36).

3. The method as claimed in claim 2 wherein the step of correcting comprises:
rotating the captured image (46).

4. The method as claimed in any one of claims 1-3 wherein the predetermined shape is a rectangle, and wherein the plurality of special boundary markers (36, 37, 38, 39) are corner markers.

5. The method as claimed in any one of claims 1-4 wherein at least one (36) of the plurality of special boundary markers (36, 37, 38, 39) is a polygon shape.

6. The method as claimed in any one of claims 1-5 wherein the geometric transform comprises affine transformations.

7. The method as claimed in any one of claims 1-6 wherein the step of processing comprises:
cutting out the principal image within the smallest predetermined shape (47) in the transformed captured image.

8. The method as claimed in any one of claims 1-7, comprising:
transposing the target onto a document template (35) having the plurality of special boundary markers (36, 37, 38, 39) so that the image capture device (2) captures the image (46) of the target with the plurality of special boundary markers (36, 37, 38, 39).

9. The method as claimed in any one of claims 1-8, comprising:
prior to the step of calculating, detecting the plurality of special boundary markers (36, 37, 38, 39); and
based on the result of the step of detecting, generating a feedback signal for indicating if the images of all of the plurality of special boundary markers (36, 37, 38, 39) are capturable by the image capture device (2).

10. A system for producing a principal image of a target using a plurality of special boundary markers (36, 37, 38, 39), the plurality of special boundary markers (36, 37, 38, 39) forming a predetermined shape and being located on the boundary of the target, an image capture device (2) capturing the image (46) of the target with the plurality of special boundary markers (36, 37, 38, 39), the system comprising:
means for calculating (27), based on the captured image (46), the smallest predetermined shape (47) that encloses the images of all of the special boundary markers (36, 37, 38, 39);
means for building (28) a geometric transform to map the locations of the images of all of the plurality of special boundary markers (36, 37, 38, 39) in the captured image (46) to corresponding locations of the smallest predetermined shape (47); and
means for processing the captured image (46) to obtain the principal image of the target, including transforming (29) the captured image (46) based on the geometric transform.

11. The system as claimed in claim 10 wherein the plurality of special boundary markers (36, 37, 38, 39) include a unique identifier marker (36) different from the other special boundary markers (37, 38, 39), and wherein the system comprises:
means for correcting for orientation errors in the captured image (46) based on the unique identifier maker (36).

12. The system as claimed in claim 11 wherein the means for correcting comprises:
means for rotating the captured image (46).

13. The system as claimed in any one of claims 10-12 wherein the predetermined shape is a rectangle, and wherein the plurality of special boundary markers (36, 37, 38, 39) are corner markers.

14. The system as claimed in any one of claims 10-13 wherein at least one of the plurality of special boundary markers (36, 37, 38, 39) is a polygon shape.

15. The system as claimed in any one of claims 10-14 wherein the geometric transform comprises affine transformations.

16. The system as claimed in any one of claims 10-15, wherein the means for processing comprises:
cutting out the principal image within the smallest predetermined shape (47) in the transformed captured image.

17. The system as claimed in any one of claims 10-16, comprising:
means for transposing the target onto a document template (35) having the plurality of special boundary markers (36, 37, 38, 39) so that the image capture device (2) captures the image (46) of the target with the plurality of special boundary markers (36, 37, 38, 39).

18. The system as claimed in any one of claims 10-17, comprising:
means for detecting the plurality of special boundary markers (36, 37, 38, 39), prior to the calculation; and
means for generating, based on the result of the detection, a feedback signal for indicating if the images of all of the plurality of special boundary markers (36, 37, 38, 39) are capturable by the image capture device (2).

## Patentansprüche

1. Verfahren zur Erzeugung eines Hauptbilds eines Ziels unter Verwendung mehrerer spezieller Begrenzungsmarkierungen (36, 37, 38, 39), wobei die speziellen Begrenzungsmarkierungen (36, 37, 38, 39) eine vorbestimmte Form bilden, und auf der Begrenzung des Ziels angeordnet sind, und ein Bilderfassungsgerät (2) vorgesehen ist, welches das Bild (46) mit den mehreren speziellen Begrenzungsmarkierungen (36, 37, 38, 39), erfasst, wobei das Verfahren umfasst:
Berechnen (27), auf Grundlage des erfassten Bilds (46), der kleinsten vorbestimmten Form (47), welche die Bilder sämtlicher spezieller Begrenzungsmarkierungen (36, 37, 38, 39) einschließt;
Bilden (28) einer geometrischen Transformation, um die Orte der mehreren speziellen Begrenzungsmarkierungen (36, 37, 38, 39) in dem erfassten Bild (46) auf entsprechende Orte auf der kleinsten vorbestimmten Form (47) abzubilden; und
Verarbeiten des erfassten Bilds (46), um das Hauptbild des Ziels zu erhalten, einschließlich Transformieren (29) des erfassten Bilds (46) auf Grundlage der geometrischen Transformation.

2. Verfahren nach Anspruch 1, bei welchem die mehreren speziellen Begrenzungsmarkierungen (36, 37, 38, 39) eine spezifische Identifizierermarkierung (36) aufweisen, die sich von den anderen speziellen Begrenzungsmarkierungen (37, 38, 39) unterscheidet, und wobei das Verfahren umfasst:
Korrigieren (31) von Orientierungsfehlern in dem erfassten Bild (46) auf Grundlage der spezifischen Identifizierermarkierung (36).

3. Verfahren nach Anspruch 2, bei welchem der Schritt des Korrigierens umfasst:
Rotieren des erfassten Bilds (46).

4. Verfahren nach einem der Ansprüche 1 bis 3, bei welchem die vorbestimmte Form ein Rechteck ist, und bei welchem die mehreren speziellen Begrenzungsmarkierungen (36, 37, 38, 39) Eckenmarkierungen sind.

5. Verfahren nach einem der Ansprüche 1 bis 4, bei welchem zumindest eine (36) der mehreren speziellen Begrenzungsmarkierungen (36, 37, 38, 39) eine Polygonform ist.

6. Verfahren nach einem der Ansprüche 1 bis 5, bei welchem die geometrische Transformation affine Transformationen umfasst.

7. Verfahren nach einem der Ansprüche 1 bis 6, bei welchem der Schritt des Verarbeitens umfasst:
Ausschneiden des Hauptbilds innerhalb der kleinsten vorbestimmten Form (47) in dem transformierten erfassten Bild.

8. Verfahren nach einem der Ansprüche 1 bis 7, welches umfasst:
Transponieren des Ziels auf eine Dokumentschablone (35), welche die mehreren speziellen Begrenzungsmarkierungen (36, 37, 38, 39) aufweist, so dass das Bilderfassungsgerät (2) das Bild (46) des Ziels mit den mehreren speziellen Begrenzungsmarkierungen (36, 37, 38, 39) erfasst.

9. Verfahren nach einem der Ansprüche 1 bis 8, umfassend:
Detektieren, vor dem Schritt des Berechnens, der mehreren speziellen Begrenzungsmarkierungen (36, 37, 38, 39); und
Erzeugen, auf Grundlage des Ergebnisses des Detektierens, eines Rückführsignals zum Anzeigen, ob die Bilder sämtlicher der mehreren speziellen Begrenzungsmarkierungen (36, 37, 38, 39) von dem Bilderfassungsgerät (2) erfassbar sind.

10. System zur Erzeugung eines Hauptbilds eines Ziels unter Verwendung mehrerer spezieller Begrenzungsmarkierungen (36, 37, 38, 39), wobei die mehreren speziellen Begrenzungsmarkierungen (36, 37, 38, 39) eine vorbestimmte Form bilden und auf der Begrenzung des Ziels angeordnet sind, wobei ein Bilderfassungsgerät (2) das Bild (46) des Ziels mit den mehreren speziellen Begrenzungsmarkierungen (36, 37, 38, 39) erfasst, wobei das System aufweist:
Mittel (27) zum Berechnen, auf Grundlage des erfassten Bilds (46), der kleinsten vorbestimmten Form (47), welche die Bilder sämtlicher der mehreren speziellen Begrenzungsmarkierungen (36, 37, 38, 39) einschließt;
Mittel (28) zum Bilden einer geometrischen Transformation zum Abbilden der Orte der Bilder sämtlicher der mehreren speziellen Begrenzungsmarkierungen (36, 37, 38, 39) in dem erfassten Bild (46) auf entsprechende Orte der kleinsten vorbestimmten Form (47); und
Mittel zum Verarbeiten des erfassten Bilds (46), um das Hauptbild des Ziels zu erhalten, einschließlich Transformieren (29) des erfassten Bilds (46) auf Grundlage der geometrischen Transformation.

11. System nach Anspruch 10, bei welchem die mehreren speziellen Begrenzungsmarkierungen (36, 37, 38, 39) eine spezifische Identifizierermarkierung (36) aufweisen, die sich von den anderen speziellen Begrenzungsmarkierungen (37, 38, 39) unterscheidet, und bei welchem das System aufweist:
Mittel zum Korrigieren von Orientierungsfehlern in dem erfassten Bild (46) auf Grundlage der spezifischen Identifizierermarkierung (36).

12. System nach Anspruch 11, bei welchem die Mittel zum Korrigieren aufweisen:
Mittel zum Rotieren des erfassten Bilds (46).

13. System nach einem der Ansprüche 10 bis 12, bei welchem die vorbestimmte Form ein Rechteck ist, und bei welchem die mehreren speziellen Begrenzungsmarkierungen (36, 37, 38, 39) Eckenmarkierungen sind.

14. System nach einem der Ansprüche 10 bis 13, bei welchem zumindest eine der mehreren speziellen Begrenzungsmarkierungen (36, 37, 38, 39) eine Polygonform ist.

15. System nach einem der Ansprüche 10 bis 14, bei welchem die geometrische Transformation affine Transformationen aufweist.

16. System nach einem der Ansprüche 10 bis 15, bei welchem die Mittel zum Verarbeiten aufweisen:
Ausschneiden des Hauptbilds innerhalb der kleinsten vorbestimmten Form (47) in dem transformierten erfassten Bild.

17. System nach einem der Ansprüche 10 bis 16, welches aufweist:
Mittel zum Transponieren des Ziels auf eine Dokumentschablone (35), welche die mehreren speziellen Begrenzungsmarkierungen (36, 37, 38, 39) aufweist, so dass das Bilderfassungsgerät (2) das Bild (46) des Ziels mit den mehreren speziellen Begrenzungsmarkierungen (36, 37, 38, 39) erfasst.

18. System nach einem der Ansprüche 10 bis 17, welches aufweist:
Mittel zum Detektieren der mehreren speziellen Begrenzungsmarkierungen (36, 37, 38, 39), vor der Berechnung; und
Mittel zur Erzeugung, auf Grundlage des Ergebnisses der Detektion, eines Rückführsignals zum Anzeigen, ob die Bilder sämtlicher der mehreren speziellen Begrenzungsmarkierungen (36, 37, 38, 39) von dem Bilderfassungsgerät (2) erfassbar sind.

## Revendications

1. Procédé de production d'une image principale d'une cible en utilisant une pluralité de marqueurs spéciaux de limite (36,37,38,39), la pluralité de marqueurs spéciaux de limite (36,37,38,39) formant une forme prédéterminée et se situant à la limite de la cible, un dispositif de capture d'images (2) capturant l'image (46) de la cible avec la pluralité de marqueurs spéciaux de limite (36,37,38,39), ce procédé comprenant :
en se basant sur l'image capturée (46), le calcul (27) de la forme prédéterminée la plus petite (47) qui renferme les images de la totalité des marqueurs spéciaux de limite (36,37,38,39) ;
la construction (28) d'une transformation géométrique pour cartographier les emplacements des images de la totalité de la pluralité de marqueurs spéciaux de limite (36,37,38,39) dans l'image capturée (46) à des emplacements correspondants sur la forme prédéterminée la plus petite (47) ; et
le traitement de l'image capturée (46) pour obtenir l'image principale de la cible, y compris la transformation (29) de l'image capturée (46), en se basant sur la transformation géométrique.

2. Procédé selon la revendication 1, dans lequel la pluralité de marqueurs spéciaux de limite (36,37,38,39) inclut un marqueur identifiant unique (36) différent des autres marqueurs de limite spéciaux (37,38,39), et ce procédé comprend :
la correction (31) des erreurs d'orientation dans l'image capturée (46) en se basant sur le marqueur identifiant unique (36).

3. Procédé selon la revendication 2, dans lequel l'étape de correction comprend :
la rotation de l'image capturée (46).

4. Procédé selon l'une quelconque des revendications 1 à 3, dans lequel la forme prédéterminée est un rectangle et la pluralité de marqueurs spéciaux de limite (36,37,38,39) sont des marqueurs de coins.

5. Procédé selon l'une quelconque des revendications 1 à 4, dans lequel au moins un (36) de la pluralité de marqueurs spéciaux de limite (36,37,38,39) est de forme polygonale.

6. Procédé selon l'une quelconque des revendications 1 à 5, dans lequel la transformation géométrique comprend des transformations affines.

7. Procédé selon l'une quelconque des revendications 1 à 6, dans lequel l'étape de traitement comprend :
la découpe de l'image principale dans la forme prédéterminée la plus petite (47) dans l'image capturée transformée.

8. Procédé selon l'une quelconque des revendications 1 à 7, comprenant :
la transposition de la cible dans un modèle de document (35) comportant la pluralité de marqueurs spéciaux de limite (36,37,38,39) de sorte que le dispositif de capture d'images (2) capture l'image (46) de la cible avec la pluralité de marqueurs spéciaux de limite (36,37,38,39).

9. Procédé selon l'une quelconque des revendications 1 à 8, comprenant :
avant l'étape de calcul, la détection de la pluralité de marqueurs spéciaux de limite (36,37,38,39) ; et
en se basant sur le résultat de l'étape de détection, la génération d'un signal de rétroaction pour indiquer si les images de la totalité de la pluralité de marqueurs spéciaux de limite (36,37,38,39) sont capturables par le dispositif de capture d'images (2).

10. Système de production d'une image principale d'une cible en utilisant une pluralité de marqueurs spéciaux de limite (36,37,38,39), la pluralité de marqueurs spéciaux de limite (36,37,38,39) formant une forme prédéterminée et se situant à la limite de la cible, un dispositif de capture d'images (2) capturant l'image (46) de la cible avec la pluralité de marqueurs spéciaux de limite (36,37,38,39), ce système comprenant :
un moyen de calcul (27), en se basant sur l'image capturée (46), de la forme prédéterminée la plus petite (47) qui renferme les images de la totalité des marqueurs spéciaux de limite (36,37,38,39) ;
un moyen de construction (28) d'une transformation géométrique pour cartographier les emplacements des images de la totalité de la pluralité de marqueurs spéciaux de limite (36,37,38,39) dans l'image capturée (46) à des emplacements correspondants sur la forme prédéterminée la plus petite (47) ; et
un moyen de traitement de l'image capturée (46) pour obtenir l'image principale de la cible, y compris la transformation (29) de l'image capturée (46), en se basant sur la transformation géométrique.

11. Système selon la revendication 10, dans lequel la pluralité de marqueurs spéciaux de limite (36,37,38,39) inclut un marqueur identifiant unique (36) différent des autres marqueurs de limite spéciaux (37,38,39), et ce système comprend :
un moyen de correction des erreurs d'orientation dans l'image capturée (46) en se basant sur le marqueur identifiant unique (36).

12. Système selon la revendication 11, dans lequel le moyen de correction comprend :
un moyen de rotation de l'image capturée (46).

13. Système selon l'une quelconque des revendications 10 à 12, dans lequel la forme prédéterminée est un rectangle et la pluralité de marqueurs spéciaux de limite (36,37,38,39) sont des marqueurs de coins.

14. Système selon l'une quelconque des revendications 10 à 13, dans lequel au moins un de la pluralité de marqueurs spéciaux de limite (36,37,38,39) est de forme polygonale.

15. Système selon l'une quelconque des revendications 10 à 14, dans lequel la transformation géométrique comprend des transformations affines.

16. Système selon l'une quelconque des revendications 10 à 15, dans lequel le moyen de traitement comprend :
la découpe de l'image principale dans la forme prédéterminée la plus petite (47) dans l'image capturée transformée.

17. Système selon l'une quelconque des revendications 10 à 16, comprenant :
un moyen de transposition de la cible dans un modèle de document (35) comportant la pluralité de marqueurs spéciaux de limite (36,37,38,39) de sorte que le dispositif de capture d'images (2) capture l'image (46) de la cible avec la pluralité de marqueurs spéciaux de limite (36,37,38,39).

18. Système selon l'une quelconque des revendications 10 à 17, comprenant :
un moyen de détection de la pluralité de marqueurs spéciaux de limite (36,37,38,39) avant le calcul ; et un moyen de génération, en se basant sur le résultat de la détection, d'un signal de rétroaction pour indiquer si les images de la totalité de la pluralité de marqueurs spéciaux de limite (36,37,38,39) sont capturables par le dispositif de capture d'images (2).
